# NEUE EUROPÄISCHE PATENTSCHRIFT

(11) **EP 3 509 784 B2**
(45) Veröffentlichungstag und Bekanntmachung des Hinweises auf die Entscheidung über den Einspruch: **29.11.2023**
(45) Hinweis auf die Patenterteilung: 22.04.2020
(21) Anmeldenummer: 17762140.6
(22) Anmeldetag: 08.09.2017
(51) Int. Cl.: B23K 9/073, B23K 9/09, B23K 9/095, B23K 9/10

(54) **KURZSCHLUSSSCHWEISSVERFAHREN**
SHORT CIRCUIT WELDING METHOD
PROCÉDÉ DE SOUDAGE PAR COURT-CIRCUIT

(30) Priorität: 09.09.2016 EP 16187971
(43) Veröffentlichungstag der Anmeldung: 17.07.2019
(73) Patentinhaber: Fronius International GmbH, 4643 Pettenbach (AT)
(72) Erfinder: WALDHÖR, Andreas, 4643 Pettenbach (AT); ARTELSMAIR, Josef, 4643 Pettenbach (AT); MAYER, Manuel, 4643 Pettenbach (AT)
(74) Vertreter: SONN Patentanwälte GmbH & Co KG
(86) Internationale Anmeldenummer: PCT/EP2017/072535
(87) Internationale Veröffentlichungsnummer: WO 2018/046633

(56) Entgegenhaltungen:
- WO-A1-2006/089322
- KR-A- 20160 105 769
- US-A1- 2005 189 335
- US-A1- 2006 138 115

## Beschreibung

Die Erfindung betrifft ein Kurzschlussschweißverfahren mit aufeinanderfolgenden Schweißzyklen mit jeweils einer Lichtbogenphase und einer Kurzschlussphase, wobei zumindest die Schweißparameter Schweißstrom und Fördergeschwindigkeit einer abschmelzenden Elektrode des Kurzschlussschweißverfahrens geregelt oder eingestellt werden, und die Elektrode zumindest während eines Teils der Lichtbogenphase mit einer vorgegebenen Vorwärtsendgeschwindigkeit in Richtung eines zu bearbeitenden Werkstücks gefördert wird, und zumindest während eines Teils der Kurzschlussphase mit einer vorgegebenen Rückwärtsendgeschwindigkeit vom Werkstück weg gefördert wird.

Offenbart wird weiters eine nicht beanspruchte Vorrichtung zur Durchführung eines solchen Kurzschlussschweißverfahrens mit aufeinanderfolgenden Schweißzyklen mit jeweils einer Lichtbogenphase und einer Kurzschlussphase, mit einer Einrichtung zur Regelung zumindest der Schweißparameter Schweißstrom und Fördergeschwindigkeit einer abschmelzenden Elektrode, und mit einer Einrichtung zur Förderung der Elektrode zumindest während eines Teils der Lichtbogenphase bis zu einer vorgegebenen Vorwärtsendgeschwindigkeit in Richtung eines zu bearbeitenden Werkstücks, und zumindest während eines Teils der Kurzschlussphase bis zu einer vorgegebenen Rückwärtsendgeschwindigkeit vom Werkstück weg.

Ein Kurzschlussschweißverfahren der gegenständlichen Art wird mit einer abschmelzenden Elektrode, welche sowohl in Vorwärtsrichtung zum Werkstück als auch in Rückwärtsrichtung vom Werkstück weg gefördert wird, mit einer entsprechenden Vorrichtung und einer Fördereinrichtung für die Elektrode und einem Schweißbrenner durchgeführt. Der Schweißbrenner weist dabei eine Fördereinrichtung für die Elektrode auf und kann sowohl für das manuelle Schweißen als auch für das automatisierte Schweißen verwendet werden. Die Vorrichtung zur Durchführung des Kurzschlussschweißverfahrens regelt dabei zumindest die Schweißparameter Schweißstrom und Fördergeschwindigkeit. Eine Schweißspannung wird insbesondere dazu verwendet, einen Kurzschluss zwischen Elektrode und Werkstück zu erkennen. Ebenso wird mit der Schweißspannung die Zündung eines Lichtbogens, also das Ende des Kurzschlusses, erkannt. Bei einem Kurzschlussschweißverfahren folgen Schweißzyklen aufeinander, in welchen sich eine Kurzschlussphase und eine Lichtbogenphase periodisch abwechseln. In der Kurzschlussphase wird die Elektrode zurück gefördert und es erfolgt der Materialübergang, wobei in der Lichtbogenphase die Elektrode vorwärts gefördert wird und der Lichtbogen Wärme in das Werkstück bzw. die Elektrode einbringt.

Beispielsweise beschreiben die US 2006/138115 A1 (Basis des Oberbegriffs der Ansprüche 1 und 10), die US 2005/189335 A1 oder die WO 2006/089322 A1 ein solches Kurzschlussschweißverfahren und eine Vorrichtung zur Durchführung eines Kurzschlussschweißverfahrens.

Die KR 20160105769 A beschreibt ein Lichtbogenschweißverfahren, wobei der Schweißstrom und die Fördergeschwindigkeit des abschmelzenden Schweißdrahts entsprechend geregelt werden, wobei die Lichtbogenphase im Wesentlichen gleich lang wie die Kurzschlussphase ist..

Bei bekannten Kurzschlussschweißverfahren treten insbesondere bei höheren Schweißgeschwindigkeiten Instabilitäten auf, welche zu Verringerungen der Schweißqualität führen können. Ein findet sich kein Hinweis auf die Erzielung einer höheren Schweißfrequenz.

Die Aufgabe der vorliegenden Erfindung besteht darin, ein oben genanntes Kurzschlussschweißverfahren zu schaffen, welches sich durch möglichst hohe Stabilität und hohe Geschwindigkeit auszeichnet und einen ausreichenden Einbrand für Werkstücke mit einer Dicke bis 3 mm bietet und eine entsprechend hohe Schweißqualität bietet. Nachteile bekannter Schweißverfahren oder Vorrichtungen sollen vermieden oder zumindest reduziert werden.

Die Aufgabe wird durch ein Kurzschlussschweißverfahren gelöst, bei dem eine Änderung der Fördergeschwindigkeit und eine Rückwärtsendgeschwindigkeit vorgegeben wird und ein Schweißstrom ge regelt oder eingestellt wird, dass die Kurzschlussphase nach Erreichen der Rückwärtsendgeschwindigkeit und nach spätestens 3 ms beendet wird und spätestens alle 8 ms wiederholt wird, wobei die Vorwärtsendgeschwindigkeit der Elektrode bereits vor dem Beginn der Kurzschlussphase reduziert wird, und die Schweißparameter derart geregelt werden, dass die Dauer eines Schweißzyklus kleiner oder gleich 8 ms beträgt, resultierend in einer Schweißfrequenz von größer oder gleich 125 Hz (siehe Anspruch 1). Die Änderung der Fördergeschwindigkeit, also die Beschleunigung, ergibt sich aus der gewünschten Dauer für die Kurzschlussphase. Für ein im Wesentlichen spritzerfreies Kurzschlussschweißverfahren wird ein Prozess mit einer Vor- und Rückbewegung der Elektrode verwendet. Aus dieser Vor- und Rückbewegung resultiert eine Schweißfrequenz, die eine Periode für einen aus Kurzschlussphase und Lichtbogenphase bestehenden Schweißzyklus vorgibt. Die Schweißfrequenz hat dabei einen Einfluss auf die Stabilität des Kurzschlussschweißverfahrens und die Schweißgeschwindigkeit. Um beides mit möglichst hoher Qualität erfüllen zu können, ist eine Schweißfrequenz größer 125 Hz erforderlich, sodass spätestens alle 8 ms ein neuer Schweißzyklus beginnt bzw. die Kurzschlussphase wiederholt wird. Um eine ausreichende Wärmeeinbringung in das Werkstück zu gewährleisten, insbesondere bei zunehmender Dicke des Werkstücks, sollte die Lichtbogenphase möglichst lang und die Kurzschlussphase entsprechend möglichst kurz sein. Eine kurze Kurzschlussphase hat dabei eine Dauer von weniger als 3 ms, bevorzugt zwischen 2 ms und 3 ms. Während der Kurzschlussphase muss die Förderrichtung der Elektrode von der Vorwärtsbewegung während der Lichtbogenphase in eine Rückwärtsbewegung während der Kurzschlussphase umgekehrt werden. Dadurch, dass die Vorwärtsendgeschwindigkeit der Elektrode bereits vor dem Beginn der Kurzschlussphase reduziert wird, kann die gewünschte geringe Dauer der Kurzschlussphase bzw. eine hohe Schweißfrequenz erzielt werden. Die Geschwindigkeiten, sowohl für die Vorwärtsbewegung als auch für die Rückwärtsbewegung sind von der Schweißanwendung, insbesondere vom Material des Werkstücks, abhängig. Typische Werte sind bis zu 60 m/min für die Vorwärts- und Rückwärtsbewegung. Die Rückwärtsendgeschwindigkeit ist dabei meist geringer als die Vorwärtsendgeschwindigkeit, sodass die Elektrode im Mittel während des Kurzschlussschweißverfahrens in Vorwärtsrichtung zum Werkstück gefördert wird.

Vorzugsweise wird die Elektrode mit einer Vorwärtsendgeschwindigkeit während der Lichtbogenphase gefördert, welche im Wesentlichen der Rückwärtsendgeschwindigkeit während der Kurzschlussphase entspricht. Sind beide Geschwindigkeiten gleich und ist die Lichtbogenphase länger als die Kurzschlussphase, wird die Elektrode im Mittel während des Kurzschlussschweißverfahrens ebenfalls in Vorwärtsrichtung gefördert. Vorteilhaft ist hierbei, dass dennoch im Mittel eine Förderung der Elektrode in Richtung Werkstück resultiert, da die Kurzschlussphase wesentlich kürzer als die Lichtbogenphase ist.

Vorteilhafter Weise wird die Elektrode mit einer Vorwärtsendgeschwindigkeit während der Lichtbogenphase und einer Rückwärtsendgeschwindigkeit während der Kurzschlussphase im Bereich zwischen 30 m/min und 60 m/min gefördert.

Dabei werden die Schweißparameter vorzugsweise derart geregelt, dass die Dauer eines Schweißzyklus kleiner oder gleich 6,6 ms beträgt, resultierend in einer Schweißfrequenz von größer oder gleich 150 Hz.

Bevorzugt werden die Schweißparameter derart geregelt werden, dass die Dauer der Lichtbogenphase mindestens doppelt so groß wie die Dauer der Kurzschlussphase ist.

Der Schweißstrom kann in Form eines Strompulses geregelt werden, dessen Dauer in der Kurzschlussphase in Abhängigkeit vom bevorstehenden Ende der Kurzschlussphase ermittelt wird.

Für die Schweißqualität ist es von Vorteil, wenn der Schweißstrom während der Kurzschlussphase zunächst über eine vorgegebene Dauer, vorzugsweise von 1 ms, auf einem vorgegebenen Wert konstant gehalten und danach reduziert wird.

Die Änderung der Fördergeschwindigkeit der Elektrode wird vorzugsweise in einem Bereich zwischen 30000 m/min/s und 60000 m/min/s vorgegeben, sodass die gewünschten Zeiten und Geschwindigkeiten erzielt werden können.

Offenbart wird auch eine oben erwähnte, nicht beanspruchte Vorrichtung zur Durchführung eines Kurzschlussschweißverfahrens, wobei die Regelungseinrichtung dazu ausgebildet ist, bereits vor dem Beginn der Kurzschlussphase die Vorwärtsendgeschwindigkeit der Fördergeschwindigkeit der Elektrode zu reduzieren und bis zur Rückwärtsendgeschwindigkeit umzukehren, und die Fördergeschwindigkeit der Elektrode so zu regeln, dass die Kurzschlussphase spätestens nach 3 ms beendet ist und und spätestens alle 8 ms wiederholt wird, resultierend in einer Schweißfrequenz von größer oder gleich 125 Hz. Zu den dadurch erzielbaren Vorteilen wird auf die obige Beschreibung des Kurzschlussschweißverfahrens verwiesen.

Vorzugsweise ist die Einrichtung zur Förderung der Elektrode durch einen Direktantrieb oder einen Linearantrieb gebildet.

Die vorliegende Erfindung wird anhand der beigefügten Zeichnungen näher erläutert. Darin zeigen:
Fig. 1 eine schematische Darstellung einer Schweißmaschine bzw. eines Schweißgerätes; und
Fig. 2 den zeitlichen Verlauf des Schweißstromes I, der Schweißspannung U und der Fördergeschwindigkeit v der Elektrode während eines erfindungsgemäßen Kurzschlussschweißverfahrens.

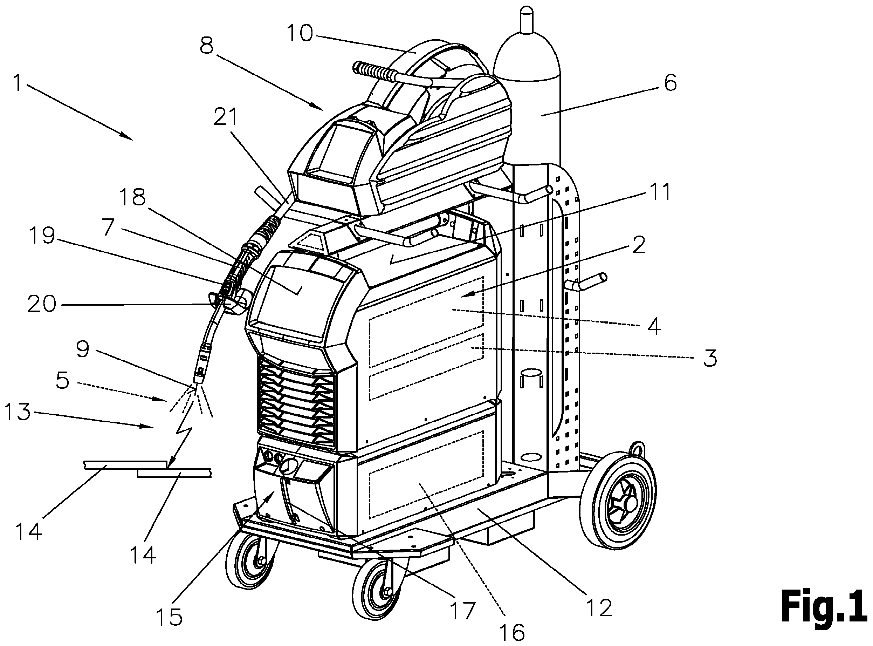

In Fig. 1 ist eine nicht beanspruchte Vorrichtung 1 zur Durchführung eines erfindungsgemäßen Schweißverfahrens bzw. ein nicht beanspruchtes Schweißgerät für verschiedenste Schweißprozesse gezeigt. Die Vorrichtung 1 umfasst eine Stromquelle 2 mit einem darin angeordneten Leistungsteil 3, eine Einrichtung 4 zur Regelung von Schweißparametern P, wie dem Schweißstrom I oder der Fördergeschwindigkeit v einer abschmelzenden Elektrode 9 bzw. eines Schweißdrahts. Die Regeleinrichtung 4 ist beispielsweise mit einem Steuerventil verbunden, welches in einer Versorgungsleitung für ein Schutzgas 5 zwischen einem Gasspeicher 6 und einem Schweißbrenner 7 angeordnet ist. Zudem kann über die Regeleinrichtung 4 noch eine Einrichtung 8 zur Förderung der abschmelzenden Elektrode 9 angesteuert werden, wobei über eine Versorgungsleitung die Elektrode 9 von einer Vorratstrommel 10 in den Bereich des Schweißbrenners 7 zugeführt wird. Die Fördereinrichtung 8 kann auch in der Vorrichtung 1, insbesondere im Gehäuse 11 der Stromquelle 2, integriert und nicht, wie in Fig. 1 dargestellt, als Zusatzgerät auf einen Fahrwagen 12 positioniert sein. Es ist auch möglich, dass die Fördereinrichtung 8 die Elektrode 9 außerhalb des Schweißbrenners 7 an die Prozessstelle zuführt.

Der Schweißstrom I zum Aufbauen eines Lichtbogens 13 zwischen der Elektrode 9 und zumindest einem Werkstück 14 wird über eine Schweißleitung (nicht dargestellt) vom Leistungsteil 3 der Stromquelle 2, der Elektrode 9 zugeführt und über den Lichtbogen 13 ein Stromkreis gebildet. Das Werkstück 14 ist über eine weitere Schweißleitung (nicht dargestellt) mit der Stromquelle 2 verbunden.

Zum Kühlen des Schweißbrenners 7 kann über ein Kühlgerät 15 der Schweißbrenner 7 mit einem Flüssigkeitsbehälter 16 mit einer Füllstandsanzeige 17 verbunden werden und eine Kühlung des Schweißbrenners 7 erzielt werden.

Die Vorrichtung 1, insbesondere die Stromquelle 2, weist weiters eine Ein-/Ausgabevorrichtung 18 auf, über die die unterschiedlichsten Schweißparameter P, Betriebsarten oder Schweißprogramme eingestellt bzw. aufgerufen und angezeigt werden können. Dabei werden die über die Ein-/Ausgabevorrichtung 18 eingestellten Schweißparameter P, Betriebsarten oder Schweißprogramme an die Regeleinrichtung 4 weitergeleitet und von dieser werden anschließend die einzelnen Komponenten der Vorrichtung 1 angesteuert bzw. entsprechende Sollwerte für die Regelung oder Steuerung vorgegeben. Hierbei können auch bei Verwendung eines entsprechenden Schweißbrenners 7 Einstellvorgänge über den Schweißbrenner 7 vorgenommen werden, wobei der Schweißbrenner 7 mit einer Schweißbrenner-Ein-/Ausgabevorrichtung 19 ausgestattet ist. Bevorzugt ist der Schweißbrenner 7 über einen Datenbus mit der Vorrichtung 1, insbesondere der Stromquelle 2 oder der Fördervorrichtung 8 verbunden.

Zum Starten des Schweißprozesses weist der Schweißbrenner 7 meist einen Startschalter (nicht dargestellt) auf, sodass durch Betätigen des Startschalters der Lichtbogen 13 gezündet werden kann. Um gegen die große Hitzeeinstrahlung vom Lichtbogen 13 geschützt zu werden, ist es möglich, dass der Schweißbrenner 7 mit einem Hitzeschutzschild 20 ausgestattet wird. Weiters ist in dem dargestellten Ausführungsbeispiel der Schweißbrenner 7 über ein Schlauchpaket 21 mit der Vorrichtung 1 verbunden. Im Schlauchpaket 21 sind die einzelnen Leitungen, wie beispielsweise die Versorgungsleitung bzw. Leitungen für die Elektrode 9, für das Schutzgas 5, für den Kühlkreislauf, für die Datenübertragung, usw., von der Vorrichtung 1 zum Schweißbrenner 7 angeordnet.

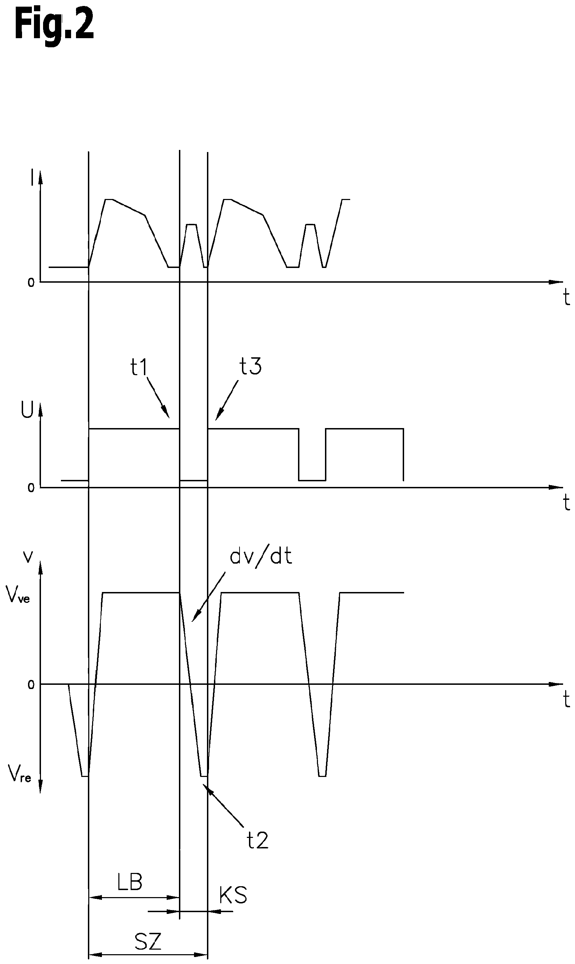

Beispielhaft ist in Fig. 2 der zeitliche Verlauf des Schweißstromes I, der Schweißspannung U und der Fördergeschwindigkeit v der Elektrode 9 während eines Kurzschlussschweißverfahrens dargestellt. Das Kurzschlussschweißverfahren wird mit den folgenden Parametern bzw. Werten durchgeführt:
Vorwärtsendgeschwindigkeit v_{Ve}: 50 m/min Rückwärtsendgeschwindigkeit v_{Re}: 40 m/min Schweißstrom I in der Kurzschlussphase KS: 120 A Dauer der Kurzschlussphase KS: im Mittel 2,5 ms Schweißfrequenz f: 150 Hz

Aus den Zeitverläufen ist ersichtlich, dass die Richtung der Förderung der Elektrode in der Kurzschlussphase KS von der Vorwärtsförderung in Richtung Werkstück mit der Vorwärtsendgeschwindigkeit v_{Ve} von 50 m/min auf eine Rückwärtsbewegung vom Werkstück weg mit einer Rückwärtsendgeschwindigkeit v_{Re} von 40m/min umgekehrt wird. Die Fördergeschwindigkeit v wird bereits vor dem Kurzschluss KS reduziert, sodass die Richtungsumkehr schneller durchgeführt werden kann und die Elektrode weniger tief in das Schmelzbad eintaucht. Beispielsweise erfolgt die Reduktion der Vorwärtsendgeschwindigkeit v_{Ve} nachdem diese eine Zeitdauer konstant war oder nach einer gewissen Lichtbogenbrenndauer. Spätestens zum Zeitpunkt t1 - also mit Beginn der Kurzschlussphase KS - wird der Einrichtung zur Förderung der Elektrode bzw. einem Motorregler ein Wert für die Beschleunigung, also die Änderung der Fördergeschwindigkeit dv/dt, vorgegeben, sodass zu einem Zeitpunkt t2 die gewünschte Rückwärtsendgeschwindigkeit v_{Re} erreicht wird.

Beim Beispiel gemäß Fig. 2 ist dafür eine Beschleunigung von 40000m/min/s (667m/s²) erforderlich, welche einem Motorregler der Fördereinrichtung vorgegeben wird, der die Fördergeschwindigkeit v entsprechend regelt. Der Motorregler gewährleistet also, dass die Rückwärtsendgeschwindigkeit v_{Re} zum Zeitpunkt t2 in der Kurzschlussphase KS erreicht wird. Ist die Rückwärtsendgeschwindigkeit v_{Re} erreicht, wird die Beschleunigung auf null gestellt und die Fördergeschwindigkeit v gehalten, reduziert oder erhöht, bis der Kurzschluss aufgebrochen wird und der Lichtbogen gezündet wird.

Ob und wie die Fördergeschwindigkeit v nach dem Erreichen der Rückwärtsendgeschwindigkeit v_{Re} verändert wird, wird bei der Definition der Schweißkennlinie festgelegt. Eine Schweißkennlinie wird nach den Anforderungen einer Schweißanwendung erstellt und ist hauptsächlich von Material (Al, CrNi, Stahl, ...), der Dicke des Werkstücks und der Schweißgeschwindigkeit abhängig.

Die Beschleunigung der Förderung der Elektrode wird unter anderem wie die Rückwärtsendgeschwindigkeit v_{Re} über die jeweilige Schweißkennlinie vorgegeben.

In der Kurzschlussphase KS befindet sich die abschmelzende Elektrode im Schmelzbad und der Tropfen wird vom Ende der Elektrode in das Schmelzbad übergeben. Um sicherzustellen, dass der Tropfen während der Dauer der Kurzschlussphase KS im Schmelzbad abgelöst wird, wird der Schweißstrom I in Form eines Strompulses während der Kurzschlussphase KS geregelt oder eingestellt. Dabei wird der Schweißstrom I derart geregelt oder eingestellt, dass der Tropfen nicht während des Strompulses abgelöst wird, sodass keine Spritzer entstehen. Die Amplitude und der Verlauf des Schweißstromes I wird an die erforderliche Energie während der kurzen Dauer der Kurzschlussphase KS angepasst- zum einen für die Aufrechterhaltung der Temperatur der Elektrode und zum anderen als Vorbereitung für die Tropfenablöse. Der Wert wird im Wesentlichen in Abhängigkeit des Materials des Werkstücks gewählt. Gemäß Fig. 2 wird eine Amplitude des Schweißstroms I von 120 A so lange konstant gehalten, bis das Ende der Kurzschlussphase KS unmittelbar bevorsteht - beispielsweise über 1 ms. Um Schweißspritzer bei der folgenden Tropfenablöse zu verhindern, wird der Strompuls erst kurz vor dem bevorstehenden Ende der Kurzschlussphase KS beendet bzw. die Amplitude des Schweißstroms I auf maximal 100 A, beispielsweise 50 A reduziert. Dementsprechend wird die Dauer des Strompulses geregelt oder eingestellt. Die Tropfenablöse erfolgt dabei anschließend an diese Phase - also nach dem Strompuls - und ist im Wesentlichen spritzerfrei.

Ob der Strompuls geregelt wird oder eingestellt ist, wird im Wesentlichen mit der Schweißkennlinie definiert bzw. vorgegeben. Der Schweißstrom I (Amplitude und Dauer) wird entweder in Abhängigkeit zumindest eines Ereignisses geregelt oder es wird für die Amplitude und Dauer des Schweißstromes ein fixer Wert vorgegeben. Der Zeitpunkt, wann die Amplitude des Schweißstromes I den reduzierten Wert erreicht hat, muss nicht zwingend vom Zeitpunkt t2 abhängen. Gemäß Fig. 2 sind diese Zeitpunkte im Wesentlichen zwar identisch, dennoch unabhängig voneinander. Selbstverständlich kann dies auch so in der Schweißkennlinie vorgegeben werden, dass diese voneinander abhängig sind.

Das bevorstehende Ende der Kurzschlussphase KS wird dabei im Wesentlichen aufgrund der Änderung der Schweißspannung U ermittelt, wie zum Zeitpunkt t3 ersichtlich.

Das bevorstehende Ende der Kurzschlussphase KS kann aber auch derart ermittelt werden, dass zu Beginn der Kurzschlussphase KS aus der aktuellen Schweißspannung U und dem aktuellen Schweißstrom I ein Widerstand berechnet und gespeichert wird. Während der Kurzschlussphase KS kann ständig ein aktueller Widerstand ermittelt werden. Ist der aktuelle Widerstand um einen definierten Faktor höher als der gespeicherte Widerstand, steht die Zündung des Lichtbogens und der Beginn der Lichtbogenphase LB unmittelbar bevor und der Schweißstrom I wird reduziert. Es kann aber auch ein ständiger Vergleich des aktuellen Widerstandes mit dem vorher ermittelten Widerstand erfolgen und eine Änderung bzw. Steigung ausgewertet werden. Ist die Änderung im Wesentlichen sprunghaft, steht die Zündung des Lichtbogens unmittelbar bevor.

Durch die Ermittlung des bevorstehenden Endes der Kurzschlussphase KS kann auch die Beschleunigung der Förderung der Elektrode angepasst werden, um die Rückwärtsendgeschwindigkeit v_{Re} noch während der Kurzschlussphase KS zu erreichen.

Durch die Rückwärtsförderung der Elektrode vom Werkstück weg wird zum Zeitpunkt t3 der Lichtbogen gezündet, sobald die Elektrode aus dem Schmelzbad austritt. Nachdem der Tropfen bereits abgelöst wurde und der Schweißstrom I bereits reduziert wurde, erfolgt dies ohne Schweißspritzer.

Der Zeitpunkt t3 der Zündung des Lichtbogens variiert geringfügig aufgrund der Schwingungen des Schmelzbades. Einen Einfluss hat auch die Eintauchtiefe der Elektrode in das Schmelzbad während der Vorwärtsförderung in Richtung Werkstück sowie die Temperatur der Elektrode. Auf die Stabilität des Schweißprozesses hat dies im Wesentlichen keinen Einfluss, da die Amplitude und Dauer des Strompulses in Abhängigkeit des bevorstehenden Endes der Kurzschlussphase KS geregelt wird. Somit wird die Temperatur des Schmelzbades weiterhin aufrecht erhalten.

Mit der Zündung des Lichtbogens und dem Beginn der Lichtbogenphase LB wird die Förderrichtung der Elektrode wieder umgekehrt bzw. die Umkehr eingeleitet und auf den Wert der Vorwärtsendgeschwindigkeit v_{Ve} beschleunigt, beispielsweise auf 50 m/min mit einer Beschleunigung von 40000 m/min/s, im Wesentlichen gleich wie die Beschleunigung auf die Rückwärtsendgeschwindigkeit v_{Re}. Ebenso wird mit der Zündung des Lichtbogens der Schweißstrom I erhöht, danach auf einen vorgegebenen Wert abgesenkt und im Wesentlichen konstant gehalten und mit Erreichen der Vorwärtsendgeschwindigkeit v_{Ve} der Elektrode bis zum Ende der Lichtbogenphase LB abgesenkt.

Dadurch, dass die Beschleunigung sowohl in Vorwärtsrichtung als auch in Rückwärtsrichtung vorgegeben wird, kann die mittlere Fördergeschwindigkeit v der Elektrode, welche in Summe eine Förderung der Elektrode in Richtung Werkstück darstellt, im Wesentlichen konstant gehalten werden. Die Stabilität des Kurzschlussschweißverfahrens kann dadurch erhöht werden.

Für derart hohe Beschleunigungen (zumindest bis 60000m/min/s) sind Fördereinrichtungen mit einer geringen Massenträgheit und einem Rotor mit einem Durchmesser von maximal 16,4 mm erforderlich. Zusätzlich wird die Elektrode vorzugsweise direkt von der Fördereinrichtung, also ohne Übersetzung oder Getriebe, angetrieben.

Für einen stabilen Schweißprozess ist es wichtig, dass in jedem Schweißzyklus SZ die gleichen Bedingungen herrschen. Aus diesem Grund muss die Rückwärtsendgeschwindigkeit v_{Re} während der Kurzschlussphase KS erreicht werden, sodass sich bei der folgenden Zündung des Lichtbogens immer die gleiche Lichtbogenlänge, also der gleiche Abstand zum Werkstück, einstellt. Dazu wird für die jeweilige Schweißanwendung eine entsprechende Amplitude für den Schweißstrom I während der Kurzschlussphase KS vorgegeben. Wird die Amplitude des Schweißstroms I zu hoch gewählt, könnte die Elektrode über der Oberfläche des Schmelzbades durchschmelzen und es würde ein ungewollter Lichtbogen gezündet werden. Bei zu niedriger Amplitude des Schweißstroms I könnte die Elektrode ungenügend vorgewärmt sein und eine schlechte Zündung folgen.

Wichtig für eine kurze Kurzschlussphase KS ist neben der hohen Beschleunigung auch, dass die Fördergeschwindigkeit v der Elektrode sowohl in Vorwärtsrichtung als auch in Rückwärtsrichtung relativ hoch ist, bevorzugt größer 30 m/min. Bei der Förderung der Elektrode zum Werkstück in Vorwärtsrichtung tritt dadurch der Kurzschluss schneller ein. Die Umkehr der Förderrichtung sollte ebenfalls schnell erfolgen, sodass die Dauer der Kurzschlussphase KS dadurch nicht wesentlich verlängert wird. Bei der Förderung der Elektrode vom Werkstück weg in Rückwärtsrichtung ist wichtig, dass der Lichtbogen so schnell wie möglich gezündet wird und die Lichtbogenphase LB beginnt, sodass die maximale Dauer der Kurzschlussphase KS von 3 ms nicht überschritten wird.

Die Dauer der Lichtbogenphase LB definiert die gewünschte Wärmeinbringung in das Werkstück, welche durch Verkürzen der Kurzschlussphase KS entsprechend erhöht werden kann. Beispielsweise ist die Lichtbogenphase LB doppelt so lang wie die Kurzschlussphase KS.

Mit dem erfindungsgemäßen Kurzschlussschweißverfahren wird also erreicht, dass sich im Wesentlichen eine konstante Dauer für die Kurzschlussphase KS und die Lichtbogenphase LB aufgrund der jeweiligen Werte der Schweißkennlinie einstellt. Zusätzlich wird dies durch eine exakte Regelung der Fördergeschwindigkeit v über die Beschleunigung und die Regelung des Schweißstromes I unterstützt.

Zusätzlich können dadurch höhere Schweißgeschwindigkeiten von bis 3 m/min erreicht werden bei gleichzeitig hoher Stabilität des Kurzschlussschweißverfahrens. Das erfindungsgemäße Kurzschlussschweißverfahren kann auch für Werkstückdicken bis zu 3 mm eingesetzt werden, wobei der erforderliche Einbrand durch die längere Lichtbogenphase LB gewährleistet wird. Je nach Schweißanwendung (z.B. Kehlnaht, Stumpfnaht, etc.) können beispielsweise bei einer Schweißfrequenz f zwischen 125 Hz und 170 Hz Werkstücke mit einer Dicke von 2 mm mit einer Schweißgeschwindigkeit von 1m/min oder Werkstücke mit einer Dicke von 0,8 mm mit einer Schweißgeschwindigkeit von 2 m/min verschweißt werden.

## Patentansprüche

1. Kurzschlussschweißverfahren mit aufeinanderfolgenden Schweißzyklen (SZ) mit jeweils einer Lichtbogenphase (LB) und einer Kurzschlussphase (KS), wobei zumindest die Schweißparameter (P) Schweißstrom (I) und Fördergeschwindigkeit (v) einer abschmelzenden Elektrode (9) des Kurzschlussschweißverfahrens geregelt oder eingestellt werden, und die Elektrode (9) zumindest während eines Teils der Lichtbogenphase (LB) mit einer vorgegebenen Vorwärtsendgeschwindigkeit (v_{Ve}) in Richtung eines zu bearbeitenden Werkstücks (14) gefördert wird, und zumindest während eines Teils der Kurzschlussphase (KS) mit einer vorgegebenen Rückwärtsendgeschwindigkeit (v_{Re}) vom Werkstück (14) weg gefördert wird, **dadurch gekennzeichnet, dass** eine Änderung der Fördergeschwindigkeit (dv/dt) und eine Rückwärtsendgeschwindigkeit (v_{Re}) vorgegeben wird und ein Schweißstrom (I) geregelt oder eingestellt wird, dass die Kurzschlussphase (KS) nach Erreichen der Rückwärtsendgeschwindigkeit (v_{Re}) und nach spätestens 3 ms beendet wird und spätestens alle 8 ms wiederholt wird, wobei die Vorwärtsendgeschwindigkeit (v_{Ve}) der Elektrode (9) bereits vor dem Beginn der Kurzschlussphase (KS) reduziert wird, und die Schweißparameter (P) derart geregelt werden, dass die Dauer eines Schweißzyklus (SZ) kleiner oder gleich 8 ms beträgt, resultierend in einer Schweißfrequenz (f) von größer oder gleich 125 Hz.

2. Kurzschlussschweißverfahren nach Anspruch 1, **dadurch gekennzeichnet, dass** die Elektrode (9) mit einer Vorwärtsendgeschwindigkeit (v_{Ve}) während der Lichtbogenphase (LB) gefördert wird, welche im Wesentlichen der Rückwärtsendgeschwindigkeit (v_{Re}) während der Kurzschlussphase (KS) entspricht.

3. Kurzschlussschweißverfahren nach Anspruch 1 oder 2, **dadurch gekennzeichnet, dass** die Elektrode (9) mit einer Vorwärtsendgeschwindigkeit (v_{Ve}) während der Lichtbogenphase (LB) und einer Rückwärtsendgeschwindigkeit (v_{Re}) während der Kurzschlussphase (KS) im Bereich zwischen 30 m/min und 60 m/min gefördert wird.

4. Kurzschlussschweißverfahren nach einem der Ansprüche 1 bis 3, **dadurch gekennzeichnet, dass** die Schweißparameter (P) derart geregelt werden, dass die Dauer eines Schweißzyklus (SZ) kleiner oder gleich 6,6 ms beträgt, resultierend in einer Schweißfrequenz (f) von größer oder gleich 150 Hz.

5. Kurzschlussschweißverfahren nach einem der Ansprüche 1 bis 4, **dadurch gekennzeichnet, dass** die Schweißparameter (P) derart geregelt werden, dass die Dauer der Lichtbogenphase (LB) mindestens doppelt so groß wie die Dauer der Kurzschlussphase (KS) ist.

6. Kurzschlussschweißverfahren nach einem der Ansprüche 1 bis 5, **dadurch gekennzeichnet, dass** der Schweißstrom (I) in Form eines Strompulses geregelt wird, dessen Dauer in der Kurzschlussphase (KS) in Abhängigkeit des bevorstehenden Endes der Kurzschlussphase (KS) ermittelt wird.

7. Kurzschlussschweißverfahren nach einem der Ansprüche 1 bis 6, **dadurch gekennzeichnet, dass** der Schweißstrom (I) während der Kurzschlussphase (KS) zunächst über eine vorgegebene Dauer auf einem vorgegebenen Wert konstant gehalten und danach reduziert wird.

8. Kurzschlussschweißverfahren nach Anspruch 7, **dadurch gekennzeichnet, dass** der Schweißstrom (I) während der Kurzschlussphase (KS) über eine Dauer von zumindest 1 ms auf dem vorgegebenen Wert konstant gehalten wird.

9. Kurzschlussschweißverfahren nach einem der Ansprüche 1 bis 8, **dadurch gekennzeichnet, dass** die Änderung der Fördergeschwindigkeit (dv/dt) in einem Bereich zwischen 30000 m/min/s und 60000 m/min/s vorgegeben wird.

## Claims

1. Short circuit welding method with successive welding cycles (SZ) having each an arc phase (LB) and a short circuit phase (KS), wherein at least the welding parameters (P) welding current (I) and feed speed (v) of a melting electrode (9) of the short circuit welding method are controlled or set, and the electrode (9) is fed in the direction of a workpiece (14) to be machined at a predetermined forward final speed (v_{Ve}) at least during a part of the arc phase (LB), and is fed away from the workpiece (14) at a predetermined rearward final speed (v_{Re}) at least during a part of the short circuit phase (KS), **characterized in that** a change in the feed speed (dv/dt) and a rearward final speed (v_{Re}) is predetermined and a welding current (I) is controlled or set, **in that** the short circuit phase (KS) is completed after reaching the rearward final speed (v_{Re}) and after 3 ms at the latest and is repeated at the latest every 8 ms, wherein the forward final speed (v_{Ve}) of the electrode (9) is already reduced before the start of the short circuit phase (KS), and the welding parameters (P) are controlled in such a way that the duration of a welding cycle (SZ) is less than or equal to 8 ms, resulting in a welding frequency (f) of greater than or equal to 125 Hz.

2. Short circuit welding method according to claim 1, **characterized in that** the electrode (9) is fed at a forward final speed (v_{Ve}) during the arc phase (LB) which substantially corresponds to the rearward final speed (v_{Re}) during the short circuit phase (KS).

3. Short circuit welding method according to claim 1 or 2, **characterized in that** the electrode (9) is fed at a forward final speed (v_{Ve}) during the arc phase (LB) and a rearward final speed (v_{Re}) during the short circuit phase (KS) in the range between 30 m/min and 60 m/min.

4. Short circuit welding method according to one of claims 1 to 3, **characterized in that** the welding parameters (P) are regulated such that the duration of a welding cycle (SZ) is less than or equal to 6.6 ms, resulting in a welding frequency (f) of 150 Hz or greater.

5. Short circuit welding method according to any of claims 1 to 4, **characterized in that** the welding parameters (P) are controlled such that the duration of the arc phase (LB) is at least twice as long as the duration of the short circuit phase (KS).

6. Short circuit welding method according to one of claims 1 to 5, **characterized in that** the welding current (I) is controlled in the form of a current pulse, the duration of which is determined in the short circuit phase (KS) as a function of the imminent end of the short circuit phase (KS).

7. Short circuit welding method according to one of claims 1 to 6, **characterized in that** the welding current (I) during the short circuit phase (KS) is first kept constant at a predetermined value over a predetermined duration and is then reduced.

8. Short circuit welding method according to claim 7, **characterized in that** the welding current (I) during the short circuit phase (KS) is kept constant at the predetermined value over a duration of at least 1 ms.

9. Short circuit welding method according to any of claims 1 to 8, **characterized in that** the change in the feed speed (dv/dt) in a range between 30000 m/min/s and 60000 m/min/s is predetermined.

## Revendications

1. Procédé de soudure par court-circuit avec des cycles de soudure (SZ) successifs avec chacun une phase d'arc électrique (LB) et une phase de court-circuit (KS), dans lequel au moins les paramètres de soudure (P) : courant de soudure (I) et vitesse de convoyage (v) d'une électrode consommable (9) du procédé de soudure par court-circuit sont régulés ou réglés et l'électrode (9) est convoyée, au moins pendant une partie de la phase d'arc électrique (LB), avec une vitesse finale d'avance (v_{Ve}) prédéterminée dans la direction d'une pièce (14) à traiter et, au moins pendant une partie de la phase de court-circuit (KS), éloignée, avec une vitesse finale de recul (v_{Re}), de la pièce (14), **caractérisé en ce qu'**une variation de la vitesse de convoyage (dv/dt) et une vitesse finale de recul (v_{Re}) est prédéterminée et un courant de soudure (I) est régulé ou réglé, **en ce que** la phase de court-circuit (KS) est terminée une fois la vitesse finale de recul (v_{Re}) atteinte et après au plus tard 3 ms et est répétée au plus tard toutes les 8 ms, dans lequel la vitesse finale d'avance (v_{Ve}) de l'électrode (9) est réduite dès avant le début de la phase de court-circuit (KS) et les paramètres de soudure (P) sont régulés de façon à ce que la durée d'un cycle de soudure (SZ) soit inférieure ou égale à 8 ms, ce qui permet d'obtenir une fréquence de soudure (f) supérieure ou égale à 125 Hz.

2. Procédé de soudure par court-circuit selon la revendication 1, **caractérisé en ce que** l'électrode (9) est convoyée avec une vitesse finale d'avance (v_{Ve}) pendant la phase d'arc électrique (LB), qui correspond globalement à la vitesse finale de recul (v_{Re}) pendant la phase de court-circuit (KS).

3. Procédé de soudure par court-circuit selon la revendication 1 ou 2, **caractérisé en ce que** l'électrode (9) est convoyée avec une vitesse finale d'avance (v_{Ve}) pendant la phase d'arc électrique (LB) et une vitesse finale de recul (v_{Re}) pendant la phase de court-circuit (KS) dans une plage entre 30 m/min et 60 m/min.

4. Procédé de soudure par court-circuit selon l'une des revendications 1 à 3, **caractérisé en ce que** les paramètres de soudure (P) sont régulés de façon à ce que la durée d'un cycle de soudure (SZ) est inférieur ou égal à 6,6 ms, ce qui permet d'obtenir une fréquence de soudure (f) supérieure ou égale à 150 Hz.

5. Procédé de soudure par court-circuit selon l'une des revendications 1 à 4, **caractérisé en ce que** les paramètres de soudure (P) sont régulés de façon à ce que la durée de la phase d'arc électrique (LB) est au moins le double de la durée de la phase de court-circuit (KS).

6. Procédé de soudure par court-circuit selon l'une des revendications 1 à 5, **caractérisé en ce que** le courant de soudure (I) est régulé sous la forme d'une impulsion de courant, dont la durée dans la phase de court-circuit (KS) est déterminée en fonction de la fin précédente de la phase de court-circuit (KS).

7. Procédé de soudure par court-circuit selon l'une des revendications 1 à 6, **caractérisé en ce que** le courant de soudure (I) est d'abord maintenu constant pendant la phase de court-circuit (KS) sur une durée prédéterminée à une valeur prédéterminée puis est réduit.

8. Procédé de soudure par court-circuit selon la revendication 7, **caractérisé en ce que** le courant de soudure (I) est maintenu constant pendant la phase de court-circuit (KS) sur une durée d'au moins 1 ms à la valeur prédéterminée.

9. Procédé de soudure par court-circuit selon l'une des revendications 1 à 8, **caractérisé en ce que** la variation de la vitesse de convoyage (dv/dt) est prédéterminée dans une plage entre 30 000 m/min/s et 60 000 m/min/s.
